(19) **Europäisches Patentamt**

**European Patent Office**

**Office européen des brevets**

(11) **EP 1 313 962 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **01971975.6**

(22) Anmeldetag: **29.08.2001**

(51) Int Cl.:
*F16D 33/16* *(2006.01)*

(86) Internationale Anmeldenummer:
**PCT/EP2001/009935**

(87) Internationale Veröffentlichungsnummer:
**WO 2002/018812 (07.03.2002 Gazette 2002/10)**

(54) **HYDRODYNAMISCHES BAUELEMENT**

HYDRODYNAMIC COMPONENT

COMPOSANT HYDRODYNAMIQUE

(84) Benannte Vertragsstaaten:
**AT BE CH CY DE DK ES FI FR GB GR IE IT LI LU MC NL PT SE TR**

(30) Priorität: **30.08.2000 DE 10042865**
**20.09.2000 DE 10046830**

(43) Veröffentlichungstag der Anmeldung:
**28.05.2003 Patentblatt 2003/22**

(73) Patentinhaber: **Voith Turbo GmbH & Co. KG**
**89522 Heidenheim (DE)**

(72) Erfinder:
• **VOGELSANG, Klaus**
**74564 Crailsheim (DE)**

• **KERNCHEN, Reinhard**
**74589 Satteldorf (DE)**
• **KLEMENT, Werner**
**89520 Heidenheim (DE)**

(74) Vertreter: **Koch-Huld, Annegret Christa**
**Dr. Weitzel & Partner**
**Patentanwälte**
**Friedenstrasse 10**
**89522 Heidenheim (DE)**

(56) Entgegenhaltungen:
| | |
|---|---|
| DE-A- 3 721 402 | DE-A- 4 342 103 |
| FR-A- 2 276 516 | US-A- 2 179 518 |
| US-A- 4 423 803 | US-A- 4 597 481 |

EP 1 313 962 B1

**Beschreibung**

Die Erfindung betrifft ein hydrodynamisches Bauelement, wie zum Beispiel aus US-A-4 597 481 bekannt.

Hydrodynamische Bauelemente mit mindestens zwei rotierenden Schaufelrädern sind als hydrodynamische Kupplungen oder hydrodynamische Drehzahl-/Drehmomentenwandlungseinrichtungen ausgeführt und werden in der Regel in Antriebssträngen genutzt. Die Leistungsübertragung erfolgt über Strömungskräfte. Die hydrodynamischen Bauelemente können schaltbar sein, wobei diese Schaltbarkeit durch Befüllung und Entleerung realisiert werden kann. Die Befüllung hydrodynamischer Kupplungen erfolgt im Bereich des Innendurchmessers des torusförmigen Arbeitsraumes in den Spalt zwischen Pumpenrad und Turbinenrad und bei Ausführungen als Stellkupplungen über eine Fangrinne am Pumpenrad oder in die Pumpenradschale. Um den Arbeitsraum sehr schnell zu befüllen und hohe Leistungsaufnahmewerte zu erzielen, ist es jedoch erforderlich, das Betriebsmittel unter Druck in den Arbeitsraum einzubringen und im Arbeitsraum zu halten, was zusätzlicher Vorkehrungen bedarf.

Des weiteren sind Möglichkeiten zur Befüllung des Arbeitsraumes mit geringem Widerstand bekannt, bei welchen der Eintritt in den torusförmigen Arbeitsraum in den Kern erfolgt. Dazu wird stellvertretend auf die nachfolgend genannten Druckschriften verwiesen:

DE-OS 755 935
DE-OS 1 750 198
DE 32 11 337 A1

Ein wesentlicher Nachteil dieser Ausführungen besteht trotz der Möglichkeit der raschen Inbetriebnahme und Übertragung hoher Leistungen darin, daß bei Zufuhr des Betriebsmediums beispielsweise Sauerstoff mit zugeführt wird, was sich nachteilig auf die Betriebsweise auswirkt, und des weiteren das relative Arbeitsvolumen dadurch gering ist.

Der Erfindung liegt daher die Aufgabe zugrunde, ein hydrodynamisches Bauelement der eingangs genannten Art derart weiterzuentwickeln, daß bei Inbetriebnahme relativ schnell hohe Leistungen aufgenommen und übertragen werden können. Dies setzt auch voraus, daß möglichst rasch mit einem relativ hohem Arbeitsvolumen das hydrodynamische Bauelement betrieben werden kann.

Die erfindungsgemäße Lösung ist durch die Merkmale des Anspruches 1 charakterisiert. Vorteilhafte Ausgestaltungen sind in den Unteransprüchen wiedergegeben.

Bei einem hydrodynamischen Bauelement mit zwei rotierenden Schaufelrädern - einem Primärschaufelrad und einem Sekundärschaufelrad, die mindestens einen torusförmigen Arbeitsraum miteinander bilden, welchem mindestens ein Eintritt für Betriebsmittel in den torusförmigen Arbeitsraum zugeordnet ist, ist der Eintritt in den Arbeitsraum im Bereich des geringsten statischen Druckes angeordnet. Dieser Bereich wird auch als Kernraum bezeichnet, welcher hinsichtlich seiner Lage durch eine Anordnung im Bereich des mittleren Durchmessers $d_m$ des torusförmigen Arbeitsraumes und im Bereich der Trennebene zwischen Primärschaufelrad und Sekundärschaufelrad beschreibbar ist oder anders durch einen Durchmesser der Flächenhalbierenden.

Dem hydrodynamischen Bauelement ist des weiteren ein geschlossener Kreislauf zugeordnet. Dieser ist mit dem Austritt aus dem torusförmigen Arbeitsraum und dem Eintritt in den torusförmigen Arbeitsraum gekoppelt Im torusförmigen Arbeitsraum stellt sich während des Betriebes ein sogenannter Arbeitskreislauf ein. Der zwischen dem Austritt und dem Eintritt angeordnete Teil des geschlossenen Kreislaufes wird auch als externer Teil bezeichnet Diese Lösung bietet den Vorteil, daß das Betriebsmittel dem torusförmigen Arbeitsraum ohne zusätzliche Gase, beispielsweise Sauerstoff, zugeführt wird, da dieses immer im geschlossenen Kreislauf geführt ist Des weiteren ist das relative Arbeitsvolumen, welches für das hydrodynamische Bauelement, insbesondere dem torusförmigen Arbeitsraum, bereitgestellt wird, höher als gegenüber Lösungen mit offenem Kreislauf, weshalb hier sehr rasch hohe Leistungen aufgenommen und übertragen werden können.

Die erfindungsgemäße Lösung bietet den Vorteil, daß das Betriebsmittel ohne Druck in den torusförmigen Arbeitsraum eingebracht werden kann und bei Betrieb des hydrodynamischen Bauelementes, insbesondere der Rotation eines der Schaufelräder auch im Arbeitsraum verbleibt. Beim Einsatz in hydrodynamischen Kupplungen können somit gegenüber herkömmlichen Lösungen ohne das Erfordernis der Bereitstellung eines Überdruckes hohe $\lambda_A$- Werte bei Drehzahlverhältnis $\upsilon$=O mit erzielt werden.

$$\upsilon = n_T/n_p \text{ entspr. VDI-Richtlinie 2153}$$

$$\lambda = f(\upsilon)$$

Der Eintritt in den Kemraum erfolgt an einer Schaufel der Beschaufelung eines der rotiemden Schaufelräder - Primärschaufelrad oder Sekundärschaufelrad. Dieser ist dabei vorzugsweise im Bereich des Schaufelendes angeordnet Denkbar wäre jedoch auch eine Anordnung zwischen Schautelgrund und Schaufelende. Der Eintritt ist dazu mit einem Betriebsmittelzfuhr- bzw. Befüllraum über mindestens einen Kanal verbunden. Dieser Kanal kann dabei

a) in die Schaufel eingearbeitet, d.h. Erstreckung durch die Schaufel oder an
b) an einer Schaufelseite angeordnet sein.

Im letzgenannten Fall besteht die Möglichkeit der Ausbildung der Schaufel mit diesem Kanal als ein Bauteil oder aber der Anordnung eines separaten Elementes an der Schaufelseite.

Der Betriebsmittelzufuhr- bzw. Befüllraum ist am Außenumfang eines Schaufelrades in radialer Richtung unterhalb des mittleren Durchmessers $d_m$ angeordnet. Der Kanal erstreckt sich dabei vom Betriebsmittelzufuhr- bzw. Befüllraum durch die Wand eines der Schaufelräder an oder durch eine Schaufel der Beschaufelung in Richtung des mittleren Durchmessers $d_m$ in den Bereich der Trennebene bis zum Schaufelende.

Vorzugsweise sind eine Vielzahl von Eintrittsstellen vorgesehen, denen eine entsprechenede Anzahl von Kanälen zugeordnet ist, wobei die einzelnen Kanäle über einen Ringkanal miteinander verbunden werden. Dieser Ringkanal wird dabei vorzugsweise vom Zuführ- bzw. Befüllraum gebildet.

Der Kanal oder die Kanäle sind im Axialschnitt durch den torusförmigen Arbeitsraum betrachtet in einem Winkel zwischen 20° und 70° gegenüber der Trennebene angeordnet.

Die erfindungsgemäße Lösung der Kemringbefüllung ist für hydrodynamische Bauelemente in Form von hydrodynamischen Kupplungen, umfassend ein als Pumpenrad fungierendes Primärschaufelrad und ein als Turbinenrad fungierendes Sekundärschaufelrad, und hydrodynamischen Drehzahl-Drehmomentenwandlern, umfassend ein Primärschaufelrad, ein Sekundärschaufelrad und mindestens ein Leitrad geeignet. Der Einsatz kann sowohl in Fahrzeugen als auch stationären Anlagen erfolgen.

Die erfindungsgemäße Lösung wird nachfolgend anhand von Figuren erläutert. Darin ist im einzelnen folgendes dargestellt

Figur 1    verdeutlicht anhand einer Ausführung einer hydrodynamischen Kupplung das Grundprinzip der Kemringbefüllung;

Figur 2    verdeutlicht eine besonders vorteilhafte Anwendung der erfindungsgemäßen Lösung.

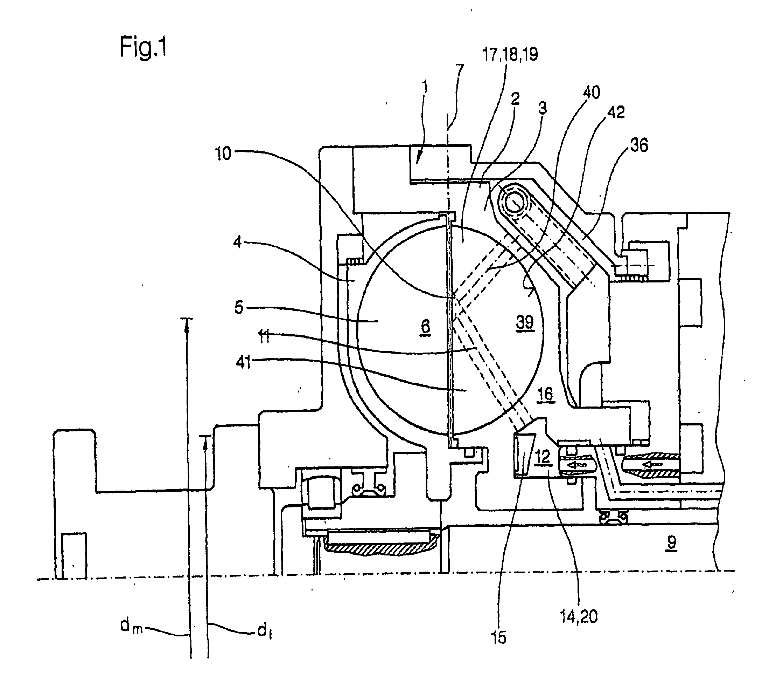

Die Figur 1 verdeutlicht in schematisch vereinfachter Darstellung anhand eines hydrodynamischen Bauelementes 1 in Form einer hydrodynamischen Kupplung 2, umfassend zwei rotierende Schaufelräder - ein Primärschaufelrad 3 und ein Sekundärschaufelrad 4, welche miteinander mindestens einen torusförmigen Arbeitsraum 5 bilden, das erfindungsgemäße Prinzip der Befüllung in den Kemraum 6 des torusförmigen Arbeitsraumes 5. Unter Kemraum 6 wird dabei ein Bereich verstanden, welcher im Querschnitt durch die hydrodynamische Kupplung 2 im torusförmigen Arbeitsraum 5 in dessen Mitte angeordnet ist oder mit anderen Worten hinsichtlich seiner Lage im Bereich einer Trennebene 7 zwischen dem Primärschaufelrad 3 und dem Sekundärschaufelrad 4 im Bereich des Mittendurchmessers $d_m$ des torusförmigen Arbeitsraumes beschreibbar ist Das Primärschaufelrad 3 der hydrodynamischen Kupplung 2 ist dabei mit einem, hier im einzelnen nicht dargestellten Antrieb 8 gekoppelt, während das Sekundärschaufelrad 4 mit einem Abtrieb 9 drehfest verbunden ist Beim Einsatz in Antriebssystemen von Fahrzeugen wird der Abtrieb 9 beispielsweise von der hydrodynamischen Kupplung 2 nachgeordneten Schaltstufen gebildet. Das Primärschaufelrad 3 fungiert dabei bei der Leistungsübertragung vom Antrieb 8 zum Abtrieb 9 als Pumpenrad, das Sekundärschaufelrad 4 als Turbinenrad.

Dem torusförmigen Arbeitsraum 5 ist mindestens ein Eintritt 10 zugeordnet. Erfindungsgemäß ist der Eintritt 10 im Arbeitsraum 5 im Bereich geringsten statischen Druckes, daß heißt Kemraum 6 angeordnet. Der Eintritt 10 ist zu diesem Zweck über mindestens einen Kanal 11 mit einem Befüllraum 12 gekoppelt, welcher der hydrodynamischen Kupplung 2 zugeordnet ist, vorzugsweise jedoch im Bereich in radialer Richtung betrachtet innerhalb des mittleren Durchmessers $d_m$ des torusförmigen Arbeitsraumes. Vorzugsweise ist der Befüllraum 12 im Bereich des inneren Durchmessers $d_i$ des torusförmigen Arbeitsraumes angeordnet und mit einem entsprechenden Betriebsmittelversorgungssystem 13 gekoppelt Der Befüllraum 12 ist im dargestellten Fall als Fangrinne 14 ausgestaltet, welche in Strömungsrichtung ausgerichtete Schaufeln 15 trägt Der Befüllraum 12 befindet sich außerhalb des torusförmigen Arbeitsraumes 6 und ist über den Kanal 11 mit dem Eintritt 10 verbunden. Der Kanal 11 erstreckt sich dabei durch die Wand 16 eines der Schaufelräder und durch eine Schaufel 17 der Beschaufelung 18 eines der beiden Schaufelräder - Primärschaufelrad 3 oder Sekundärschaufelrad 4. Im dargestellten Fall erfolgt die Befüllung des Kernraumes 6 vorzugsweise über das mit dem Antrieb 8 gekoppelte Primärschaufelrad, daß heißt Pumpenrad 3. Der Kanal 11 zur Führung des Betriebsmittels vom Befüllraum 12 erstreckt sich somit durch die Wand 16 des Primärschaufelrades 3 und einer Schaufel 17 der Beschaufelung 18 des Primärschaufelrades 3. Dabei erfolgt in Abhängigkeit der Anordnung des Befüllraumes 12 gegenüber dem torusförmigen Arbeitsraum 5 die Ausbildung des Kanales 11 in den Kemraum 6. Der dargestellte Fall verdeutlicht eine vorteilhafte Ausgestaltung, bei welchen der Befüllraum 12 unterhalb des mittleren Durchmessers des torusförmigen Arbeitsraumes in radialer Richtung angeordnet ist, vorzugsweise im Bereich des inneren Durchmessers $d_i$ des torusförmigen Arbeitsraumes 5. In axialer Richtung erfolgt die Anordnung des Befüllraumes 12 im Bereich zwischen der Trennebene 7 und den äußeren Abmessungen in axialer Richtung des entsprechenden Schaufelrades, hier des Primärschaufelrades 3. Daraus ergibt sich im dargestellten Fall eine im wesentlichen in einem Winkel zwischen 20° und 70° verlaufende Kanalführung für den Kanal 11. Die Führung des Kanales 11 durch eine Schaufel 17 der Beschaufelung 18 erfolgt dabei vorzugsweise im Bereich der Schaufelrückseite 19. Es besteht dabei die Möglichkeit, den Kanal 11 in eine standardmäßig ohnehin vorhandene Schaufel 17 der Beschaufelung 18 einzuarbeiten oder aber speziell die Schaufel, welche den Kanal 11 trägt entsprechend dieser Funktion auszugestalten, so daß diese sich von den anderen Schaufeln der Beschaufelung 18 hinsichtlich der Ausführung unterscheidet. Dies ist jedoch im wesentlichen abhängig von der zur Verfügung stehenden Wandstärke der einzelnen Schaufeln der Beschaufelung 18 und des weiteren den erforderlichen bereitszustellenden Strömungsquerschnitten zur Realisierung einer Befüllung in einem entsprechenden Zeitraum.

Unter einem besonders vorteilhaften Aspekt der Erfindung ist nicht nur ein Eintritt 10 in den Kemraum 6 vorgesehen, sondern eine Mehrzahl jährlicher Eintritte, hier jedoch im einzelnen nicht dargestellt. Die einzelnen Eintritte sind dabei jeweils über entsprechende Kanäle 11 mit dem Befüllraum 12 verbunden. Die einzelnen Kanäle sind dabei über einen Ringkanal 20, welcher vom Befüllraum 12 gebildet werden kann, miteinander gekoppelt. Das Betriebsmittel, insbesondere Öl oder bei Wasserkupplungen Wasser kann drucklos als auch mit einem Druck beaufschlagt sein.

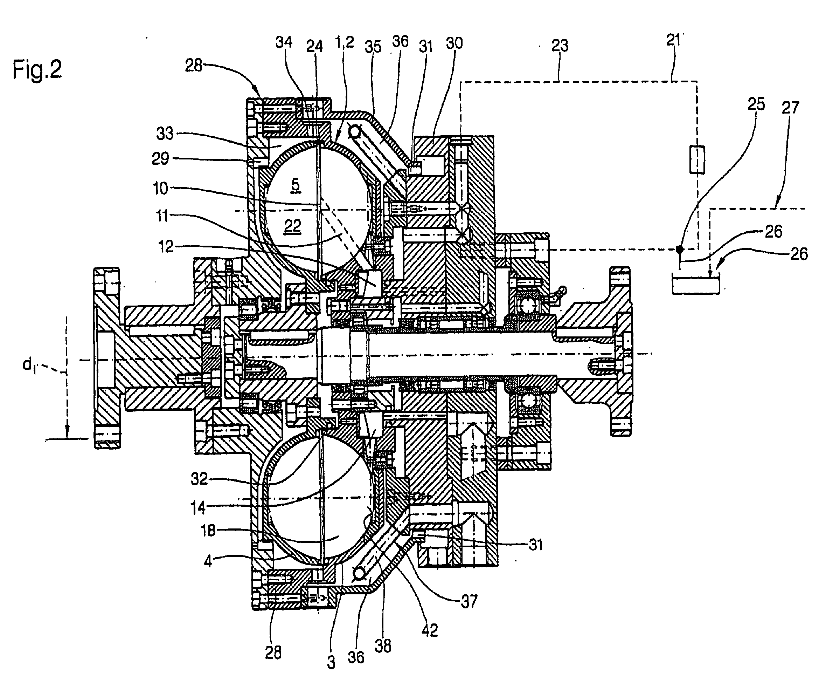

In einer besonders vorteilhaften Ausgestaltung findet die erfindungsgemäße Lösung der Befüllung in den Kemraum 6 Anwendung, bei einer hydrodynamischen Kupplung 2 mit einem geschlossenen Kreislauf 21. Dieser geschlossene Kreislauf 21 umfaßt dabei den sich im torusförmigen Arbeitsraum 5 einstellenden Arbeitskreislauf 22 und einen externen außerhalb des Arbeitsraumes 5 geführten Teil 23, welcher mit dem Eintritt 10 in den torusförmigen Arbeitsraum 5 und mindestens einem Austritt 24, ist nur nach Ablauf aus dem torusförmigen Arbeitsraum 5 verbunden ist Der geschlossene Kreislauf 21 ist dabei druckdicht ausgeführt, und wie in der Figur 2 verdeutlicht über eine Knotenstelle 25 mit Mitteln 26 zur Befüllung und/oder Entleerung und Mittel 27 zur Erzeugung eines Beeinflußungsdruckes für den Druck im geschlossenen Kreislauf 21 wahlweise koppelbar. Die hydrodynamische Kupplung 2 umfaßt zu diesem Zweck ein dem Primärschaufelrad 3 zugeordnetes Gehäuse 28, welches drehfest mit dem Primärschaufelrad 3 gekoppelt ist und gegenüber dem Sekundärschaufelrad 4 über erste Mittel zur Abdichtung 29, einem ruhenden Gehäuse 30 über zweite Mittel zur Abdichtung 31 abgedichtet ist. Zur Realisierung eines druckdichten geschlossenen Kreislaufes 21 ist es des weiteren erforderlich, daß die einzelnen Verbindungsleitungen und Kanäle zwischen dem Austritt 24 aus dem torusförmigen Arbeitsraum 5 und dem Eintritt 10 in den torusförmigen Arbeitsraum 5 ebenfalls druckdicht ausgeführt sind. Des weiteren ist es erforderlich, den torusförmigen Arbeitsraum gegenüber der Umgebung druckdicht auszuführen. Dies erfolgt in der Regel durch Vorsehen dritter Mittel zur Abdichtung 32 zwischen dem Primärschaufelrad 3 und dem Sekundärschaufelrad 4 im Bereich der Trennebene 7 im Bereich des inneren Durchmessers $d_i$ des torusförmigen Arbeitsraumes 5. Bei diesen Dichteinrichtungen handelt es sich um mitrotierende Dichtungen, welche aufgrund der Relativbewegung zwischen den einzelnen gegeneinander abzudichtenden Elementen eine berührungsfreie Dichtungen, vorzugsweise Labyrinthdichtungen ausgeführt sind. Dies gilt für ersten Mittel zur Abdichtung 29, die zweiten Mittel zur Abdichtung 31 und die dritten Mittel zur Abdichtung 32. Der Austritt 24 mündet dabei in einen ersten Zwischenraum 33 zwischen dem Gehäuse 28 und dem Turbinenrad. Das Gehäuse 28 weist zu diesem Zweck eine Zwischenwand auf, die mit dem Primärschaufelrad 3 drehfest verbunden ist und des weiteren mit dem Gehäuse 28. Über Durchlaßöffnungen 34 in der Zwischenwand besteht die Möglichkeit des Überströmens von Betriebsmittel in die Pumpenradschale 35. Diese und der Außenumfang des Primärschaufelrades 3 begrenzen dabei einen sogenannten Staupumpenraum 36, in welchen Mittel 37 zur Abfuhr von Betriebsmittel aus dem Ablaufraum und zur Aufrechterhaltung des Betriebsmittelumlaufes im geschlossenen Kreislauf 21 in Form von Staudruckpumpen 38 angeordnet sind. Diese sind Bestandteile des externen Teiles 23 des geschlossenen Kreislaufes 21.

Die in der Figur 2 dargestellte Ausführung einer hydrodynamischen Kupplung stellt eine besonders bevorzugte Anwendung der Befüllung in den Kemraum 6 dar. Andere Ausgestaltungen sind jedoch ebenfalls denkbar. Die erfindungsgemäße Lösung ist des weiteren nicht auf das hydrodynamische Bauelement in Form einer hydrodynamischen Kupplung beschränkt, sondern kann ebenso bei hydrodynamischen Drehzahl- und Drehzahlwandlern zur Anwendung gelangen.

Unter einem weiteren Aspekt der Erfindung werden in vorteilhafter Weise für beide Ausführungen gemäß Figur 1 und 2 sogenannte Entlüftungsschaufeln 39 in der Beschaufelung 18 eines der beiden Schaufelräder, hier vorzugsweise des Primärschaufelrades vorgesehen. Dabei erfolgt die Entlüftung aus dem Kemraum 6 in einen Raum außerhalb des torusförmigen Arbeitsraumes 5, gemäß Beispiel aus den Figuren 1 und 2 in den Staudruckpumpenraum 36. Andere Möglichkeiten sind jedoch ebenfalls denkbar. Die Entlüftungsschaufeln 39 sind entsprechend gestaltet und tragen vorzugsweise sogenannte Entlüftungsbohrungen 40, welche sich durch die Schaufelwände vom Bereich des Schaufelendes 41 in Richtung des Schaufelgrundes 42 der Beschaufelung 18 erstreckt. Die Anordnung der Entlüftungsbohrung 40 kann dabei direkt mittig durch eine einzelne Schaufel der Beschaufelung 18 erfolgen oder aber entweder im Bereich der Schaufelvorderseite oder Schaufelrückseite angeordnet werden. Dies ist im einzelnen abhängig von der konkreten Ausführung der Schaufeln der Beschaufelung 18, insbesondere der Schaufeldicke und dem verwendeten Herstellungsverfahren.

Die erfindungsgemäße Lösung ist für hydrodynamische Bauelemente in Form von hydrodynamischen Kupplungen und hydrodynamischen Drehzahl-/Drehzahlwandlern für den Einsatz zur sowohl in mobilen als auch stationären Anlagen einsetzbar. Eine Beschränkung bezüglich des Anwendungsgebietes besteht nicht.

Bezugszeichenliste

| | |
|---|---|
| 1 | hydrodynamisches Bauelement |
| 2 | hydroynamische Kupplung |
| 3 | Primärschaufelrad |
| 4 | Sekundärschaufelrad |
| 5 | torusförmiger Arbeitsraum |
| 6 | Kemraum |
| 7 | Trennebene |
| 8 | Antrieb |
| 9 | Abtrieb |
| 10 | Eintritt |
| 11 | Kanal |
| 12 | Befüllraum |
| 13 | Betriebsmittel Versorgungssystem |
| 14 | Fangrinne |
| 15 | Schaufe |
| 16 | Wand |
| 17 | Schaufel |
| 18 | Beschaufelung |
| 19 | Schaufel rückseite |
| 20 | Ringkanal |
| 21 | geschlossener Kreislauf |
| 22 | Arbeitskreislauf |
| 23 | externer Teil des geschlossenen Kreislaufes |
| 24 | Austritt |
| 25 | Knotenstelle |
| 26 | Mittel zur Befüllung und/oder Entleerung |
| 27 | Mittel zur Erzeugung eines Beeinflußungsdruckes zum Druck im geschlossenen Kreislauf 21 |
| 28 | Gehäuse |
| 29 | erste Mittel zur Abdichtung |
| 30 | ruhendes Gehäuse |
| 31 | zweite Mittel zur Abdichtung |
| 32 | dritte Mittel zur Abdichtung |
| 33 | erster Zwischenraum |
| 34 | Durchlaßöffiung |
| 35 | Pumpenradschale |
| 36 | Staudruckpumpenraum |
| 37 | Mittel zur Abfuhr von Betriebsmitteln und Gewährleistung des Betriebsmittelumlaufes im geschlossenen Kreislauf |
| 38 | Steuerdruckpumpe |
| 39 | Entlüftungsschaufel |
| 40 | Entlüftungsbohrungen |
| 41 | Schaufelende |
| 42 | Schaufelgrund |
| $d_m$ | mittlerer Durchmesser des torusförmigen Arbeitsraumes |
| $d_i$ | innerer Durchmesser des torusförmigen Arbeitsraumes |

**Patentansprüche**

1. Hydrodynamisches Bauelement (1)

   1.1 mit zwei rotierenden Schaufelrädern - einem Primärschaufelrad (3) und einem Sekundärschaufelrad (4), die mindestens einen torusförmigen Arbeitsraum (5) miteinander bilden;
   1.2 mit mindestens einem Eintritt (10) für Betriebsmittel in den torusförmigen Arbeitsraum (5);
   1.3 der Eintritt (10) in den Arbeitsraum (5) ist im Bereich des geringsten statischen Druckes angeordnet, der durch den Durchmesser der Flächenhalbierenden charakterisiert ist;
   1.4 mit mindestens einem Austritt (24) aus dem torusförmigen Arbeitsraum (5);
   1.5 mit einem im torusförmigen Arbeitsraum (5) sich einstellenden Arbeitskreislauf (22) während des Betriebes;
   1.6 mit einem dem Arbeitsraum zugeordneten geschlossenen Kreislauf (21);
   1.7 mit einem externen Teil (23) des geschlossenen Kreislaufes (21), welcher zwischen dem Austritt (24) und dem Eintritt (10) angeordnet ist

2. Hydrodynamisches Bauelement (1) nach Anspruch 1, **dadurch gekennzeichnet, daß** der Eintritt (10) im Kemraum (6), welcher hinsichtlich seiner Lage durch eine Anordnung im Bereich des mittleren Durchmessers $d_m$ des torusförmigen Arbeitsraumes und im Bereich der Trennebene (7) zwischen Primärschaufelrad (3) und Sekundärschaufelrad (4) beschreibbar ist, angeordnet ist.

3. Hydrodynamisches Bauelement (1) nach Anspruch 2, **dadurch gekennzeichnet, daß** der Kemraum (6) durch einen Durchmesser um die Flächenhalbierende bei Draufsicht auf den Arbeitsraum (5) beschreibbar ist.

4. Hydrodynamisches Bauelement (1) nach einem der Ansprüche 1 bis 3, **dadurch gekennzeichnet, daß** der Eintritt (10) in den Kemraum (6) an einer Schaufel (17) der Beschaufelung (18) eines der rotiemden Schaufelräder - Primärschaufelrad (3) oder Sekundärschaufelrad (4) - angeordnet ist.

5. Hydrodynamisches Bauelement (1) nach Anspruch 4, **dadurch gekennzeichnet, daß** der Eintritt (10) im Bereich des Schaufelendes (41) angeordnet ist.

6. Hydrodynamisches Bauelement (1) nach einem der Ansprüche 4 oder 5, **gekennzeichnet durch** die folgenden Merkrnale:

   6.1 mit einem Betriebsmittelzufuhr- bzw. Befüllraum (12);
   6.2 der Betriebsmittelzufuhr bzw. Befüllraum (12) ist mit dem Eintritt (10) über einen Kanal (11) verbunden.

7. Hydrodynamisches Bauelement (1) nach Anspruch 6, **dadurch gekennzeichnet, daß** der Kanal (11) in eine Schaufel (17) der Beschaufelung (18) eingearbeitet ist.

8. Hydrodynamisches Bauelement (1) nach Anspruch 6, **dadurch gekennzeichnet, daß** der Kanal (11) an einer Seitenfläche der Schaufel (17) der Beschaufelung (18) angeordnet ist

9. Hydrodynamisches Bauelement (1) nach einem der Ansprüche 6 bis 8, **gekennzeichnet durch** die folgenden Merkmale:

   9.1 der Betriebsmittelzufuhr- bzw. Befüllraum (12) ist am Außenumfang eines Schaufelrades (3, 4) in radialer Richtung unterhalb des mittleren Durchmessers ($d_m$) angeordnet;
   9.2 der Kanal (11) erstreckt sich vom Betriebsmittetzufuhr- bzw. Befüllraum (12) **durch** die Wand (16) eines der Schaufelräder (3, 4) an oder **durch** eine Schaufel (17) der Beschaufelung (18) in Richtung des mittleren Durchmessers ($d_m$) in den Bereich der Trennebene (7) bis zum Schaufelende (41).

10. Hydrodynamisches Bauelement (1) nach einem der Ansprüche 6 bis 9, **dadurch gekennzeichnet, daß** eine Vielzahl von Eintrittsstellen (10) vorgesehen sind, denen eine Vielzahl von Kanälen (11) zugeordnet sind, wobei die einzelnen Kanäle (11) über einen Ringkanal (20) miteinander verbunden sind.

11. Hydrodynamisches Bauelement (1) nach Anspruch 10, **dadurch gekennzeichnet, daß** der Ringkanal (20) vom Zuführ- bzw. Befüllraum (12) gebildet wird.

12. Hydrodynamisches Bauelement (1) nach einem der Ansprüche 6 bis 11, **dadurch gekennzeichnet, daß** im Axialschnitt durch den torusförmigen Arbeitsraum (5) betrachtet der Kanal (11) in einem Winkel zwischen 20° und 70° gegenüber der Trennebene angeordnet ist.

13. Hydrodynamisches Bauelement (1) nach einem der Ansprüche 1 bis 12, **dadurch gekennzeichnet, daß** dieses als hydrodynamische Kupplung (2) ausgeführt ist, umfassend ein als Pumpenrad fungierendes Primärschaufelrad (3) und ein als Turbinenrad fungierendes Sekundärschaufelrad (4).

14. Hydrodynamisches Bauelement (1) nach Anspruch 13, **dadurch gekennzeichnet, daß** dieses als Doppelkupplung ausgeführt ist, umfassend zwei Primärschaufelräder und zwei Sekundärschaufelräder, die miteinander zwei torusförmige Arbeiträume bilden.

15. Hydrodynamisches Bauelement (1) nach einem der Ansprüche 1 bis 13, **dadurch gekennzeichnet, daß** dieses als hydrodynamischer Drehzahl-/Drehmomentenwandler ausgeführt ist, umfassend ein Primärschaufelrad, ein Sekundärschaufelrad und mindestens ein Leitrad.

16. Hydrodynamisches Bauelement (1) nach einem der Ansprüche 1 bis 15, **dadurch gekennzeichnet, daß** der geschlossene Kreislauf (21) druckdicht ausgeführt ist.

17. Hydrodynamisches Bauelement (1) nach einem der Ansprüche 4 bis 16, **dadurch gekennzeichnet, daß** die den Eintritt in den Kemraum (6) tragenden Schaufeln (17) sich mit ihrer zum jeweils anderen Schaufelrad gerichteten Schaufeloberkante bis in den Bereich der Trennebene (7) erstrecken.

18. Verwendung eines hydrodynamischen Bauelementes (1) gemäß einem der Ansprüche 1 bis 17 in einem Antriebssystem für Fahrzeuge.

19. Verwendung eines hydrodynamischen Bauelementes (1) gemäß einem der Ansprüche 1 bis 17 in einem Antriebssystem für eine stationäre Anlage.

**Claims**

1. A hydrodynamic module (1)

    1.1 with two rotating blade wheels, a primary blade wheel (3) and a secondary blade wheel (4), which jointly form at last one toroidal working chamber (5);
    1.2 with at least one inlet (10) into the toroidal working chamber (5) for operating media;
    1.3 the inlet (10) into the working chamber (5) is arranged in the region of the lowest static pressure which is **characterized by** the diameter of the bisectrix of the surface area;
    1.4 with at least one outlet (24) from the toroidal working chamber (5);
    1.5 with a working circulation (22) occurring in the toroidal working chamber (5) during operation;
    1.6 with a closed circulation (21) associated with the working chamber;
    1.7 with an external part (23) of the closed circulation (21) which is arranged between the outlet (24) and the inlet (10).

2. A hydrodynamic module (1) according to claim 1, **characterized in that** the inlet (10) is arranged in the core chamber (6) which can be described with respect to its position by an arrangement in the region of the central diameter $d_m$ of the toroidal working chamber and in the region of the parting plane (7) between primary blade wheel (3) and secondary blade wheel (4).

3. A hydrodynamic module (1) according to claim 2, **characterized in that** the core chamber (6) can be described by a diameter about the bisectrix of the surface area in a top view of the working chamber (5).

4. A hydrodynamic module (1) according to one of the claims 1 to 3, **characterized in that** the inlet (10) into the core chamber (6) is arranged on a blade (17) of the blade configuration (18) of one of the rotating blade wheels, primary blade wheel (3) or secondary blade wheel (4).

5. A hydrodynamic module (1) according to claim 4, **characterized in that** the inlet (10) is arranged in the region of the blade end (41).

6. A hydrodynamic module (1) according to one of the claims 4 or 5, **characterized by** the following features:

   6.1 with a supply or filling chamber (12) for the operating medium;
   6.2 with the supply or filling chamber (12) for the operating medium being joined with the inlet (10) via a conduit (11).

7. A hydrodynamic module (1) according to claim 6, **characterized in that** the conduit (11) is incorporated in a blade (17) of the blade configuration (18).

8. A hydrodynamic module (1) according to claim 6, **characterized in that** the conduit (11) is arranged on a side surface of the blade (17) of the blade configuration (18).

9. A hydrodynamic module (1) according to one of the claims 6 to 8, **characterized by** the following features:

   9.1 the supply or filling chamber (12) for the operating medium is arranged on the outer circumference of a blade wheel (3, 4) in the radial direction beneath the central diameter ($d_m$).
   9.2 the conduit (11) extends from the supply or filling chamber (12) for the operating medium through the wall (16) of one of the blade wheels (3, 4) on or through a blade (17) of the blade configuration (18) in the direction of the central diameter ($d_m$) into the region of the parting plane (7) up to the blade end (41).

10. A hydrodynamic module (1) according to one of the claims 6 to 9, **characterized in that** a plurality of inlet points (10) are provided to which a plurality of conduits (11) are assigned, with the individual conduits (11) being joined with each other via an annular conduit (20).

11. A hydrodynamic module (1) according to claim 10, **characterized in that** the annular conduit (20) is filled by the supply or filling chamber (12).

12. A hydrodynamic module (1) according to one of the claims 6 to 11, **characterized in that** the conduit (11) is arranged at an angle of between 20° and 70° relative to the parting plane when seen in an axial sectional view through the toroidal working chamber (5).

13. A hydrodynamic module (1) according to one of the claims 1 to 12, **characterized in that** the same is configured as a hydrodynamic coupling (2), comprising a primary blade wheel (3) acting as a pump wheel and a secondary blade wheel (4) acting as a turbine wheel.

14. A hydrodynamic module (1) according to claim 13, **characterized in that** the same is configured as a double coupling, comprising two primary blade wheels and two secondary blade wheels which jointly form two toroidal working chambers.

15. A hydrodynamic module (1) according to one of the claims 1 to 13, **characterized in that** the same is configured as a hydrodynamic speed/torque converter, comprising a primary blade wheel, a secondary blade wheel and at least one guide wheel.

16. A hydrodynamic module (1) according to one of the claims 1 to 15, **characterized in that** the closed circulation (21) is configured in a pressure-tight manner.

17. A hydrodynamic module (1) according to one of the claims 4 to 16, **characterized in that** the blades (17) carrying the inlet into the core chamber (6) extend with their upper edge of the blade facing the respective other blade wheel up to the region of the parting plane (7).

18. The use of a hydrodynamic module (1) according to one of the claims 1 to 17 in a drive system for vehicles.

19. The use of a hydrodynamic module (1) according to one of the claims 1 to 17 in a drive system for a stationary unit.

**Revendications**

1. Elément structurel hydrodynamique (1)

  1.1. avec deux roues à pales tournantes - une roue à pales primaire (3) et une roue à pales secondaire (4) - qui forment à elles deux au moins une enceinte de travail de forme torique (5) ;
  1.2 avec au moins une entrée (10) d'admission de fluide de travail dans l'enceinte de travail de forme torique (5) ;
  1.3 l'entrée (10) dans l'enceinte de travail (5) est disposée dans la zone de moindre pression statique qui est **caractérisée par** le diamètre de la bissectrice de surface;
  1.4 avec au moins une sortie (24) de l'enceinte de travail (5) de forme torique ;
  1.5 avec un circuit de travail (22) se mettant en oeuvre dans l'enceinte de travail (5) de forme torique pendant le fonctionnement ;
  1.6 avec un circuit fermé (21) associé à l'enceinte de travail ;
  1.7 avec une partie externe (23) du circuit fermé (21) qui est disposée entre la sortie (24) et l'entrée (10).

2. Elément structurel hydrodynamique (1) selon la revendication 1, **caractérisé en ce que** l'entrée (10) est disposée dans l'enceinte centrale (6) dont la localisation peut être décrite par sa position à la hauteur du diamètre central $d_m$ de l'enceinte de travail de forme torique et à la hauteur du plan de séparation (7) entre la roue à pales primaire (3) et la roue à pales secondaire (4).

3. Elément structurel hydrodynamique (1) selon la revendication 2, **caractérisé en ce que** l'enceinte centrale (6) peut être décrite par un diamètre autour de la bissectrice de surface en vue de dessus sur l'enceinte de travail (5).

4. Elément structurel hydrodynamique (1) selon l'une quelconque des revendications 1 à 3, **caractérisé en ce que** l'entrée (10) dans l'enceinte centrale (6) est disposée sur une pale (17) de l'ensemble de pales (18) d'une des roues à pales tournantes - la roue à pales primaire (3) ou la roue à pales secondaire (4).

5. Elément structurel hydrodynamique (1) selon la revendication 4, **caractérisé en ce que** l'entrée (10) est disposée à la hauteur de l'extrémité de la pale (41).

6. Elément structurel hydrodynamique (1) selon l'une quelconque des revendications 4 ou 5, **caractérisé par** les particularités suivantes :

  6.1 avec une enceinte d'alimentation en fluide de travail ou enceinte de remplissage (12) ;
  6.2 l'enceinte d'alimentation en fluide de travail ou enceinte de remplissage (12) est reliée à l'entrée (10) par l'intermédiaire d'un canal (11).

7. Elément structurel hydrodynamique (1) selon la revendication 6, **caractérisé en ce que** le canal (11) est incorporé dans une pale (17) de l'ensemble de pales (18).

8. Elément structurel hydrodynamique (1) selon la revendication 6, **caractérisé en ce que** le canal (11) est disposé sur une face latérale de la pale (17) de l'ensemble de pales (18).

9. Elément structurel hydrodynamique (1) selon l'une quelconque des revendications 6 à 8, **caractérisé par** les particularités suivantes :

  9.1 l'enceinte d'alimentation en fluide de travail ou enceinte de remplissage (12) est disposée sur la circonférence extérieure d'une roue à pales (3, 4) en dessous du diamètre central ($d_m$) suivant la direction radiale ;
  9.2 le canal (11) s'étend à partir de l'enceinte d'alimentation en fluide de travail ou enceinte de remplissage (12) à travers la paroi (16) d'une des roues à pales (3, 4) sur ou à travers une pale (17) de l'ensemble de pales (18) suivant la direction du diamètre central ($d_m$) dans la région du plan de séparation (7) jusqu'à l'extrémité de la pale (41).

10. Elément structurel hydrodynamique (1) selon l'une quelconque des revendications 6 à 9, **caractérisé en ce qu'**est prévue une pluralité d'entrées (10) auxquelles sont associés autant de canaux (11), les différents canaux (11) étant reliés entre eux par l'intermédiaire d'un canal annulaire (20).

11. Elément structurel hydrodynamique (1) selon la revendication 10, **caractérisé en ce que** le canal annulaire (20) est formé par l'enceinte d'alimentation en fluide de travail ou enceinte de remplissage (12).

12. Elément structurel hydrodynamique (1) selon l'une quelconque des revendications 6 à 11, **caractérisé en ce que**, vu en section axiale de l'enceinte de travail de forme torique (5), le canal (11) est disposé à un angle compris entre 20° et 70 par rapport au plan de séparation.

13. Elément structurel hydrodynamique (1) selon l'une quelconque des revendications 1 à 12, **caractérisé en ce que** cet élément est réalisé sous forme de coupleur hydrodynamique (2), comprenant une roue à pales primaire (3) faisant office de pompe et une roue à pales secondaire (4) faisant office de turbine.

14. Elément structurel hydrodynamique (1) selon la revendication 13, **caractérisé en ce que** cet élément est réalisé sous forme de coupleur double comprenant deux roues à pales primaires et deux roues à pales secondaires formant entre elles deux enceintes de travail de forme torique.

15. Elément structurel hydrodynamique (1) selon l'une quelconque des revendications 1 à 13, **caractérisé en ce que** cet élément est réalisé sous forme de convertisseur vitesse - couple comprenant une roue à pales primaire, une roue à pales secondaire et au moins un distributeur.

16. Elément structurel hydrodynamique (1) selon l'une quelconque des revendications 1 à 15, **caractérisé en ce que** le circuit fermé (21) est réalisé de manière à être étanche à la pression.

17. Elément structurel hydrodynamique (1) selon l'une quelconque des revendications 4 à 16, **caractérisé en ce que** les pales (17) portant l'entrée dans l'enceinte centrale (6) ont leur bord supérieur dirigé vers l'autre roue à pales respective qui s'étend jusqu'à la hauteur du plan de séparation (7).

18. Application d'un élément structurel hydrodynamique (1) selon l'une quelconque des revendications 1 à 17 à un système d'entraînement pour véhicules.

19. Application d'un élément structurel hydrodynamique (1) selon l'une quelconque des revendications 1 à 17 à un système d'entraînement pour une installation fixe.

Fig.1

Fig.2